# FASCICULE DE BREVET EUROPEEN

(11) **EP 0 849 659 B1**
(45) Date de publication et mention de la délivrance du brevet: **03.03.2004**
(21) Numéro de dépôt: 97403065.2
(22) Date de dépôt: 17.12.1997
(51) Int. Cl.: G06F 1/24

(54) **Dispositif numérique d'initialisation d'un circuit intégré**
Digitale Rücksetzvorrichtung eines integrierten Schaltkreises
Digital reset device for integrated circuit

(30) Priorité: 20.12.1996 FR 9615755
(43) Date de publication de la demande: 24.06.1998
(73) Titulaire: ATMEL NANTES SA, 44300 Nantes (FR)
(72) Inventeur: Rouger, Jean-Jacques, 44390 Nort Sur Erdre (FR)
(74) Mandataire: Fréchède, Michel

(56) Documents cités:
- FR-A- 2 716 048
- US-A- 4 464 584
- US-A- 5 442 310
- US-A- 5 513 358

## Description

L'invention concerne un dispositif numérique d'initialisation d'un circuit intégré.

Les circuits intégrés modernes comportent dans leurs nombreuses couches d'intégration une multitude d'éléments actifs permettant la réalisation de fonctions complexes.

L'alimentation en énergie de ces éléments actifs pose de nombreux problèmes, tels que notamment, en régime permanent, la fourniture d'une tension d'alimentation stable et exempte d'un niveau de bruit trop important.

Alors que ces problèmes ont fait l'objet d'études nombreuses à la suite desquelles différentes solutions ont pu être proposées, un autre problème de la mise en oeuvre de ces circuits résulte de l'existence d'un établissement désordonné des valeurs de tension d'alimentation aux différents noeuds de ce type de circuit ainsi que l'apparition intempestive de signaux d'horloge non calibrés pendant cette période d'établissement. Ces phénomènes ont pour effet d'entraîner un dysfonctionnement de ces circuits et il est nécessaire de prévoir des circuits d'initialisation permettant d'en réduire les effets.

Parmi les solutions retenues, les plus classiques consistent globalement à assurer une détection de la valeur instantanée de la tension d'alimentation de l'ensemble du circuit intégré, puis à effectuer une comparaison de cette valeur instantanée à une ou plusieurs valeurs de seuil, aux fins d'introduire, par l'intermédiaire de circuits de retard appropriés, un pilotage séquentiel adapté de la valeur de la tension d'alimentation appliquée en des noeuds ou points essentiels du circuit intégré.

De tels dispositifs, connus sous la désignation de circuit RESET en langage anglo-saxon, retenant des solutions analogiques, donnent satisfaction. Toutefois, en raison de leur caractère essentiellement analogique, ces types de dispositifs mettant avant tout en jeu des circuits à capacité et à résistance, ne peuvent facilement être soumis à un processus d'intégration au sein même du circuit intégré. La consommation en surface de silicium pour assurer l'intégration de tels circuits est en effet rédhibitoire pour un composant ou élément jouant avant tout le rôle d'un composant passif vis-à-vis du circuit intégré proprement dit.

US 4 464 584 montre un microprocesseur avec un RESET circuit arrangement. Si l'alimentation d'énergie est interrompu, l'arrangement assure l'opération sans faute du microprocesseur après un délai.

US 5 442 310 montre un circuit de discrimination avec RESET pour identifier que le "power-up" soit complet.

US 5 513 358 montre un circuit qui donne un signal pour indiquer que la tension d'alimentation est plus grand que le minimum nécessaire pour la stabilité et la sécurité de l'arrangement des autres circuits de l'appareil.

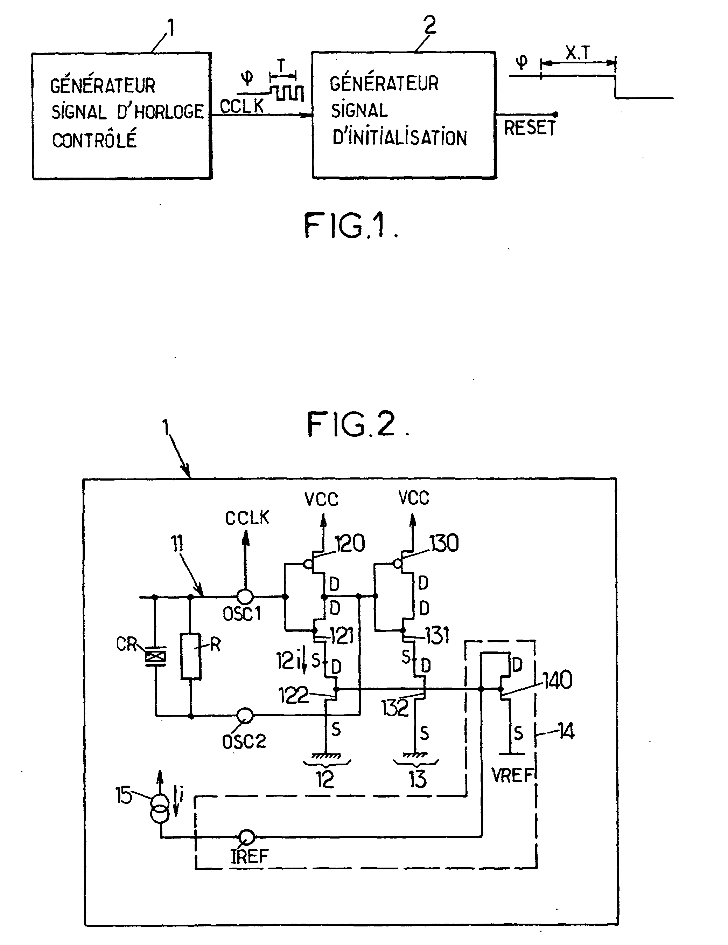

FR 2 716 048 assigné a la même demanderesse montre seulement le générateur d'un signal d'horloge un oscillateur (figure 2) qui est utilisé dans un arrangement tout différent de celui de l'invention.

La présente invention a pour objet de remédier à l'inconvénient précité par la mise en oeuvre d'un dispositif numérique d'initialisation.

Un autre objet de la présente invention est en outre, en raison du caractère numérique du circuit d'initialisation mis en oeuvre, une très large facilité d'intégration de ce dernier, notamment en technologie MOS.

Un autre objet de la présente invention est en outre, dans la technologie MOS précitée d'intégration, l'obtention d'un gain de surface de silicium consommée, du fait de l'intégration d'une telle fonction, dans un rapport 100 par rapport aux techniques antérieures précitées.

Le dispositif numérique d'initialisation d'un circuit intégré alimenté à partir d'une tension d'alimentation, objet de la présente invention, est remarquable en ce qu'il comprend un module générateur d'un signal d'horloge comportant une phase initiale de pré-oscillations, suivie d'un signal périodique, et un module générateur d'un signal d'initialisation programmable recevant ce signal d'horloge contrôlé et permettant d'engendrer ce signal d'initialisation maintenu à une valeur vraie pendant la durée de cette phase initiale de pré-oscillation augmentée d'un nombre déterminé de périodes du signal périodique.

Le dispositif numérique d'initialisation d'un circuit intégré, objet de l'invention, trouve application à la réalisation de circuits intégrés de tout type, en technologie CMOS.

Il sera mieux compris à la lecture de la description et à l'observation des dessins ci-après, dans lesquels :
- la figure 1 représente un schéma synoptique illustratif du dispositif numérique d'initialisation d'un circuit intégré, objet de la présente invention ;
- la figure 2 représente un détail de réalisation de la figure 1, en particulier un mode de réalisation préférentiel non limitatif du module générateur d'un signal d'horloge de ce dispositif ;
- la figure 3 représente un détail de réalisation de la figure 1, en particulier un mode de réalisation préférentiel non limitatif d'un module générateur du signal d'initialisation de ce dispositif ;
- la figure 4a représente un détail de réalisation préférentiel d'un module de détection constituant le module générateur du signal d'initialisation ;
- la figure 4b représente un chronogramme des signaux obtenus en des points remarquables du module de détection représenté en figure 4a ;
- la figure 5a représente un détail de réalisation particulier d'un module de comptage-décomptage constituant le module générateur du signal d'initialisation ;
- la figure 5b représente un chronogramme des signaux obtenus en des points remarquables du module de comptage-décomptage représenté en figure 5a ;
- la figure 6a représente un détail de réalisation d'un module de comptage-décomptage préférentiel permettant d'engendrer plusieurs signaux d'initialisation successifs et une initialisation séquentielle programmable d'un circuit intégré ;
- la figure 6b représente un chronogramme des signaux obtenus en des points remarquables du module de comptage-décomptage représenté en figure 6a.

Une description plus détaillée du dispositif numérique d'initialisation d'un circuit intégré, objet de la présente invention, sera maintenant donnée en liaison avec la figure 1 et les figures suivantes.

Ainsi que représenté sur la figure 1 précitée, le dispositif numérique d'initialisation d'un circuit intégré, objet de la présente invention, ce dispositif et ce circuit étant alimentés à partir d'une tension d'alimentation, comporte, de manière remarquable, un module 1 générateur d'un signal d'horloge contrôlé, référencé CCLK.

D'une manière générale, on indique que le signal d'horloge contrôlé CCLK consiste en une phase initiale, notée ϕ, dite de pré-oscillation, pendant laquelle le module générateur du signal d'horloge contrôlé 1 délivre en fait une tension continue d'amplitude donnée puis, suite à cette phase de pré-oscillation, un signal périodique ou un signal en créneau de période T. A titre d'exemple non limitatif, on indique que l'amplitude du signal continu délivré pendant la phase de pré-oscillation ϕ peut être égale à 2,5 V par exemple, alors que le signal périodique présente une amplitude crête-à-crête comprise entre 0 et 5 V par exemple.

En outre, ainsi que représenté sur la figure 1, le dispositif objet de la présente invention comporte un module 2 générateur d'un signal d'initialisation programmable, ce module 2 générateur du signal d'initialisation recevant le signal d'horloge contrôlé CCLK et permettant d'engendrer le signal d'initialisation proprement dit, ce signal portant la référence RESET sur la figure 1. D'une manière particulièrement avantageuse, le signal d'initialisation RESET est maintenu à une valeur logique vraie pendant la durée de la phase initiale de pré-oscillation, la phase ϕ précitée, durée augmentée d'un nombre X déterminé de périodes T du signal périodique. Ainsi qu'on l'a représenté de manière schématique sur la figure 1, on comprend que le signal d'initialisation présente donc une valeur logique vraie pendant la somme des durées de la phase de pré-oscillation ϕ et des X périodes T du signal périodique, alors qu'au-delà de cette durée le signal d'initialisation RESET prend la valeur complémentée de cette valeur logique vraie.

Par convention, on indique que la valeur logique vraie correspond par exemple à la valeur crête de tension égale à 5 V, alors que la valeur complémentée de cette valeur logique vraie correspond à la valeur 0 V, c'est-à-dire à la tension de référence du dispositif.

On indique en outre que la durée de la phase de pré-oscillation ϕ peut être réglable et peut être prise égale à une valeur comprise entre 1 et 10 ms par exemple. En ce qui concerne la valeur de la période T du signal périodique, on indique que ce signal ou cette suite d'impulsions périodiques peut correspondre à un signal d'horloge de fréquence 8 MHz par exemple.

Une description plus détaillée du module 1 générateur du signal d'horloge contrôlé CCLK sera maintenant donnée en liaison avec la figure 2.

Ainsi que représenté sur la figure 2 précitée, on indique que le générateur de ce signal d'horloge contrôlé peut comprendre, en cascade, un oscillateur à cristal, noté 11, comportant un cristal proprement dit, référencé CR, sur lequel est montée une résistance de très forte valeur R comprise entre 1 et 3 MΩ, cette résistance étant montée en parallèle sur le cristal. Le module générateur du signal d'horloge contrôlé 1 comporte également un premier étage de type amplificateur, portant la référence 12, ce premier étage étant commandé par l'oscillateur à cristal 11 et étant suivi d'un deuxième étage, portant la référence 13, de type bistable, commandé en commutation par le premier étage 12.

En outre, un étage de commande en courant, portant la référence 14, est également prévu pour assurer la commande en courant du premier 12 et du deuxième étage 13 précédemment mentionnés.

Le premier étage 12 comprend par exemple un transistor CMOS de type P, noté 120, dont l'électrode de source S est connectée à la tension d'alimentation VCC et un transistor CMOS de type N, référencé 121, dont l'électrode de drain est connectée à l'électrode de drain D du transistor CMOS de type P portant la référence 120. Les transistors CMOS 120 et 121 ont leur électrode de grille connectées en parallèle et reliées à une borne de l'oscillateur à cristal, notée OSC₁.

En outre, le deuxième étage de type bistable, portant la référence 13, comprend un transistor CMOS de type P, portant la référence 130, et un transistor CMOS de type N référencé 131. Ce deuxième étage 13 est commandé en commutation par le premier étage 12, le point commun drain-drain du premier étage 12 étant connecté à l'électrode commune de grille des transistors CMOS 130 et 131 du deuxième étage précité. Les points communs drain-drain sont notés DD.

En ce qui concerne l'étage de commande en courant 14, celui-ci permet d'assurer la commande en courant du premier et du deuxième étage 12, 13 de type bistable au moyen d'un même courant de référence, noté IREF. Ce courant peut être délivré par un générateur de courant 15 ajustable. On rappelle que ce générateur de courant peut être intégré ou non à l'étage de commande en courant 14.

L'étage de commande en courant 14 comprend, ainsi que représenté sur la figure 2 précitée, un transistor CMOS de type N, référencé 140, constituant en fait un miroir de courant.

Enfin, le premier et le deuxième étage 12, 13 sont complétés par un transistor CMOS de type N, portant la référence 122, respectivement 132, de même type que le deuxième transistor, et donc de type N, les transistors 121 et 131, et respectivement connectés en cascade avec ce dernier par un point commun source-drain, noté SD. L'électrode de grille des transistors 122 et 132 est reliée à l'étage de commande en courant 14 et commandée au moyen du courant de référence IREF. Les électrodes de source des transistors CMOS 122 et 133 ont leur électrode de source S connectée à la tension de référence.

On rappelle que la fonction miroir de courant est obtenue par la connexion de l'électrode de drain du transistor CMOS 140 à l'électrode de grille de ce dernier, cette électrode de grille étant elle-même reliée au générateur de courant 15, ainsi que représenté sur la figure 2. L'électrode de grille des troisièmes transistors 122 et 132 du premier et du deuxième étage de type bistable 12, 13 est alors reliée électriquement au miroir de courant précité, c'est-à-dire à l'électrode de grille du transistor CMOS 140.

Pour un courant de référence IREF = i valeur donnée, on rappelle que le miroir de courant constitué impose dans le circuit de drain des transistors CMOS 122 ou 132 et finalement dans les transistors CMOS 120 et 121, respectivement 130, 131, un courant proportionnel au courant de référence en fonction des paramètres de canal du troisième transistor 122, 132 du premier et du deuxième étage de type bistable 12, 13. Le signal d'horloge contrôlé CCLK peut alors être constitué par le signal délivré, soit au point de test OSC1, soit au point de test OSC2.

Pour une description plus détaillée du module générateur 1 d'un signal d'horloge contrôlé précité, on pourra utilement se reporter à la demande de brevet français n° 94 01512, intitulée "Oscillateur asservi en courant", publiée le 11/08/1995 et déposée au nom de la demanderesse.

D'une manière générale, on indique que la durée de la période de pré-oscillation ϕ peut être réglée en fonction de la valeur du courant de référence IREF précédemment mentionné dans la description, ce qui permet bien entendu de régler la durée de cette phase de pré-oscillation à une valeur comprise entre 1 et 10 ms par exemple.

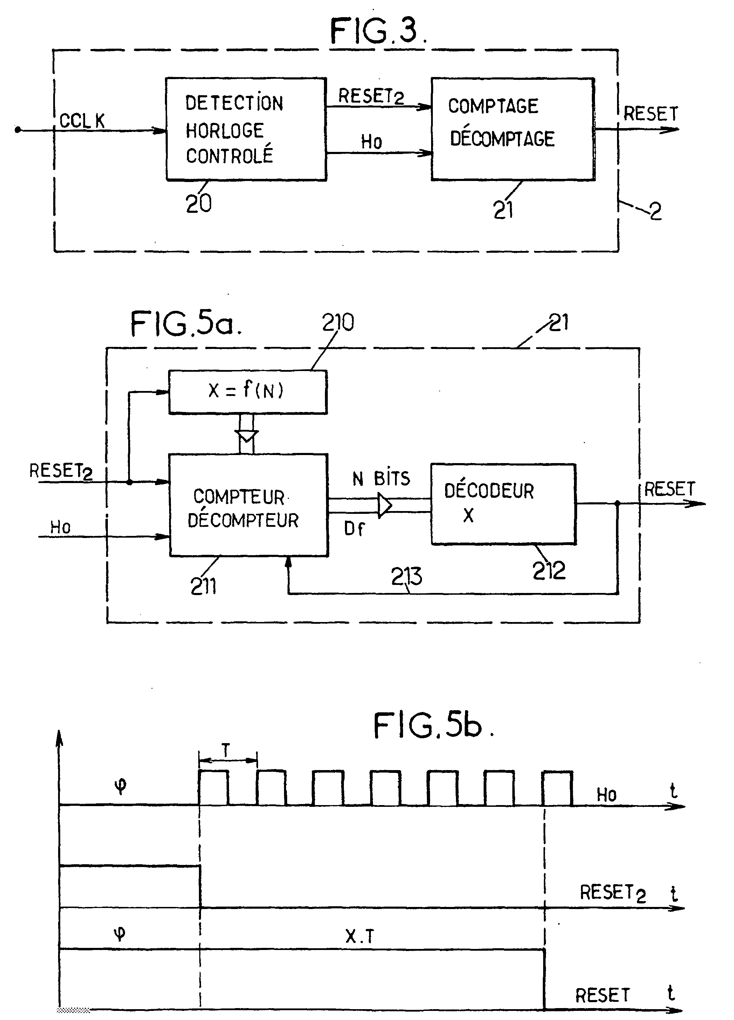

Une description plus détaillée du module 2 générateur du signal d'initialisation sera maintenant donnée en liaison avec la figure 3 et les figures suivantes 4a, 4b.

Ainsi que représenté sur la figure 3 précitée, le module 2 générateur du signal d'initialisation RESET peut comprendre avantageusement un module de détection du signal d'horloge contrôlé CCLK, ce module de détection portant la référence 20 sur la figure .3. Le module de détection 20 reçoit le signal d'horloge contrôlé CCLK et délivre un signal logique de détection d'horloge contrôlé, référencé RESET₂, ce signal étant à la valeur logique vraie pendant la durée de la phase de pré-oscillation, et à la valeur complémentée de cette valeur vraie au-delà de la phase de pré-oscillation ϕ précitée. Le module de détection 20 délivre en outre un premier signal de détection d'horloge contrôlé, noté H₀, lequel sera décrit ci-après dans la description.

En outre, le module 2 générateur du signal d'initialisation RESET comporte également un module 21 de comptage-décomptage d'un nombre déterminé d'impulsions de la suite d'impulsions. Le module 21 de comptage-décomptage reçoit, d'une part, le signal de détection d'horloge contrôlé RESET₂ et, d'autre part, le premier signal de détection d'horloge contrôlé H₀, pour délivrer le signal d'initialisation RESET maintenu à la valeur logique vraie pendant la durée de la phase initiale de pré-oscillation ϕ augmentée du nombre déterminé de périodes de la suite d'impulsions périodiques.

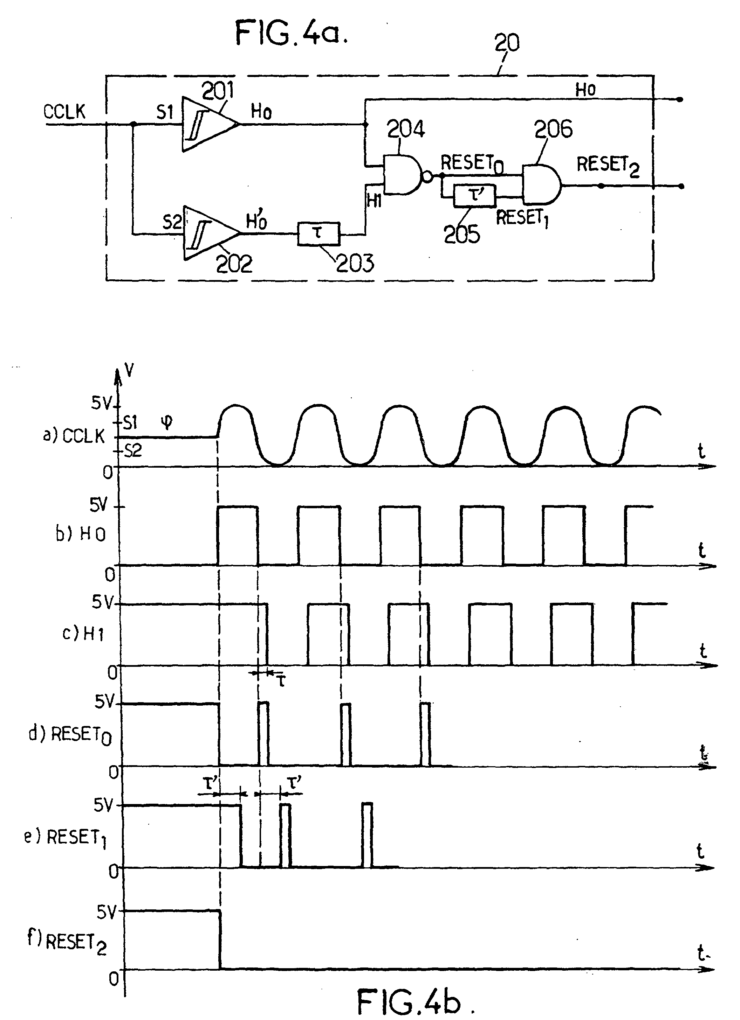

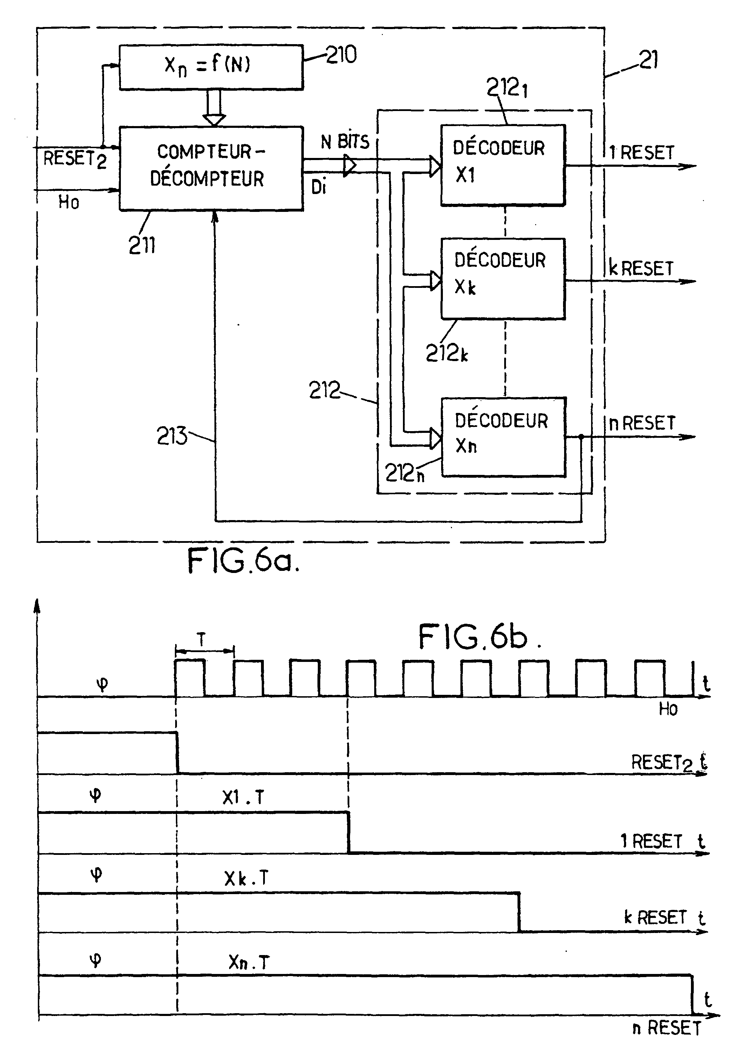

Une description plus détaillée du module de détection 20 et du module de comptage-décomptage 21 sera maintenant donnée en liaison avec les figures 4a, 4b et 5a, 5b.

Ainsi qu'on l'a représenté sur la figure 4a, le module de détection 20 comprend avantageusement un premier circuit de déclenchement à seuil, portant la référence 201, ce premier circuit de déclenchement à seuil étant par exemple constitué par un circuit de type Trigger de Schmitt. Le circuit de déclenchement à seuil 201 est un circuit de type classique, et, à ce titre, ne sera pas décrit en détail. On indique simplement que la valeur de seuil S₁ est choisie à une valeur supérieure à la valeur d'amplitude du signal d'horloge contrôlé CCLK pendant la phase de pré-oscillation de ce dernier. Ainsi, pour une tension continue délivrée pendant la phase de pré-oscillation égale par exemple à 2,5 V, on indique que la valeur de seuil S₁ peut être choisie à 3,5 V par exemple. Le circuit de déclenchement à seuil 201 délivre le premier signal de détection d'horloge contrôlé, noté H₀, ce signal étant à la valeur logique vraie lorsque le signal d'horloge contrôlé CCLK est supérieur à la première valeur de seuil S₁ et une valeur complémentée de cette valeur vraie lorsque le signal d'horloge contrôlé CCLK est inférieur à cette première valeur de seuil S₁ précitée.

Sur la figure 4b, on a représenté respectivement aux points a) et b) le signal d'horloge contrôlé CCLK et le premier signal de détection d'horloge contrôlé H₀ correspondant.

Le module de détection 20 comprend également un deuxième circuit de déclenchement à seuil 202, de même type que le premier circuit de déclenchement à seuil 201 mais dont la valeur de seuil S₂ est inférieure à la valeur d'amplitude du signal d'horloge contrôlé CCLK pendant la phase de pré-oscillation de ce dernier. A titre d'exemple non limitatif, on indique que la valeur de seuil S₂ peut être choisie égale à 1,6 V pour les valeurs correspondantes d'amplitude de tension égale à 2,5 V du signal d'horloge contrôlé CCLK continu délivré pendant la phase ϕ de pré-oscillation. Le deuxième circuit de déclenchement à seuil 202 délivre un deuxième signal de détection d'horloge contrôlé, noté H'₀, lequel est à la valeur logique vraie lorsque le signal d'horloge contrôlé CCLK est inférieur à la deuxième valeur de seuil S₂ et à une valeur complémentée de cette valeur logique vraie lorsque le signal d'horloge contrôlé CCLK est supérieur à la deuxième valeur de seuil S₂.

Le circuit de détection 20 comporte également une porte logique NON-ET (NAND), portant la référence 204, ainsi qu'un premier circuit retardateur, portant la référence 203, lequel délivre un deuxième signal de détection d'horloge contrôlé retardé, noté H₁, délivré à la porte logique NON-ET 204. La porte logique NON-ET 204 délivre alors un signal logique intermédiaire, référencé RESET₀, lequel est à la valeur vraie lorsque l'un des premier signal de détection d'horloge contrôlé H₀ et deuxième signal de détection d'horloge contrôlé retardé H₁ est à la valeur vraie, et ce même signal logique intermédiaire à la valeur complémentée de cette valeur vraie lorsque le premier signal de détection d'horloge contrôlé H₀ et le deuxième signal de détection d'horloge contrôlé retardé H₁ ont la même valeur logique. La forme des signaux correspondants est représentée au point d) de la figure 4b où le signal logique intermédiaire RESET₀ est ainsi formé par une tension continue à la valeur crête 5 V, valeur logique vraie pendant la phase de pré-oscillation ϕ suivie d'une série d'impulsions dont la durée est égale à la durée de retard τ introduit par le circuit de retard 203, cette série d'impulsions étant bien entendu délivrée à la fréquence ou à la période T de la série d'impulsions constitutives du signal d'horloge contrôlé CCLK.

Ainsi qu'on l'observera en outre sur la figure 4a, le circuit de détection 20 comporte également une porte logique ET 206, et un deuxième circuit retardateur 205 dont la valeur de retard τ' est supérieure à celle introduite par le premier circuit retardateur 203. La porte logique ET 206 reçoit directement le signal logique intermédiaire RESET₀ précédemment cité et un signal logique intermédiaire retardé, délivré à partir du signal logique intermédiaire RESET₀ par l'intermédiaire du deuxième circuit retardateur 205, ce signal logique intermédiaire retardé étant référencé RESET₁. La porte logique ET 206 délivre ainsi un signal logique de détection d'horloge, référencé RESET₂ sur la figure 4a. La forme des signaux RESET₁ délivrés par le deuxième circuit de retard 205 et par la porte logique ET 206, signal RESET₂, est donnée aux points e) et f) de la figure 4b. En ce qui concerne le signal logique intermédiaire retardé RESET₁, on indique que celui-ci correspond au signal logique intermédiaire RESET₀ décalé de la valeur de retard τ' introduite par le circuit de retard 205. Dans un mode de réalisation pratique, on indique que lorsque le premier circuit de retard 203 introduit une valeur de retard τ égale à 1 ns par exemple, le circuit 205 est choisi de façon à introduire un retard τ' égal à 20 ns par exemple.

En ce qui concerne le signal logique de détection d'horloge RESET₂, on indique que celui-ci correspond en fait à un signal logique à la valeur logique vraie pendant la phase de pré-oscillation ϕ, c'est-à-dire pendant la durée correspondante de celle-ci, et à la valeur complémentée à la valeur vraie au-delà.

Le signal logique de détection d'horloge RESET₂ précédemment décrit est alors délivré avec le premier signal de détection d'horloge contrôlé H₀ au module de comptage-décomptage 21, lequel permet de décompter un nombre X de périodes du signal d'horloge contrôlé précité pour engendrer le signal d'initialisation, ainsi qu'il sera décrit ci-après dans un mode de réalisation particulier non limitatif du module de comptage-décomptage 21, en liaison avec les figures 5a et 5b.

Ainsi que représenté sur la figure 5a, le module de comptage-décomptage 21 comprend, afin de réaliser le comptage-décomptage d'un nombre déterminé d'impulsions, un compteur-décompteur proprement dit 211, ce compteur-décompteur étant programmable par l'intermédiaire d'un circuit de programmation 210. Le compteur-décompteur 211 reçoit sur une première entrée de déclenchement de comptage le signal logique de détection d'horloge, référencé RESET₂, et sur une entrée de comptage le premier signal de détection d'horloge contrôlé H₀ engendré par le circuit de détection 20 précité. Le compteur-décompteur 211 délivre une valeur de comptage-décomptage finale, notée Df, laquelle est égale à la valeur programmée délivrée par le circuit 210, cette valeur programmée X étant par exemple codée sur N bits.

En outre, le module de comptage-décomptage 21 comprend un circuit décodeur 212, également programmable par une valeur de décodage programmée, cette valeur de décodage programmée étant notée X et égale à la valeur programmée de comptage-décomptage du compteur-décompteur 211. Le circuit décodeur programmable 212 reçoit la valeur de comptage-décomptage finale Df délivrée par le compteur-décompteur 211 et, sur coïncidence de la valeur de comptage-décomptage finale Df et de la valeur programmée de décodage X, délivre sur une sortie le signal d'initialisation RESET, lequel, maintenu à la valeur vraie pendant la durée de la phase initiale ϕ de pré-oscillation, est augmenté de cette même valeur vraie pendant une durée égale au nombre déterminé X de périodes, le signal d'initialisation RESET étant à une valeur complémentée de cette valeur vraie au-delà de cette durée.

En outre, un circuit de verrouillage 213 est prévu, lequel permet l'interconnexion de la sortie du décodeur 212 sur une entrée de verrouillage du compteur-décompteur 211 pour assurer l'arrêt du comptage-décomptage sur atteinte par la valeur de comptage-décomptage de la valeur de comptage-décomptage finale Df programmée.

Les différents signaux en entrée et en sortie du circuit de comptage-décomptage 21 sont représentés en figure 5b, en particulier le signal d'initialisation RESET maintenu à la valeur logique vraie pendant la durée de pré-oscillation ϕ augmentée d'un nombre X de périodes de la suite d'impulsions de périodes T, ce signal étant maintenu à la valeur logique vraie pendant une durée ϕ+X.T et à la valeur complémentée de cette valeur logique vraie au-delà.

Le mode de réalisation du module de comptage-décomptage 21 tel que représenté en figure 5a n'est pas limitatif.

En particulier, dans un mode de réalisation préférentiel, on indique que le dispositif numérique d'initialisation d'un circuit intégré, objet de la présente invention, permet de réaliser une initialisation séquentielle de différentes zones fonctionnellement indépendantes du circuit intégré correspondant, étant entendu qu'une initialisation successive de ces zones présente un intérêt pour l'initialisation globale du circuit concerné.

Sur la figure 6a, on a donc représenté un circuit de comptage-décomptage 21 dans lequel les mêmes références représentent les mêmes éléments que dans le cas de la figure 5a.

Toutefois, le circuit décodeur 212 de la figure 5a est, dans la figure 6a, remplacé par une pluralité de circuits décodeurs élémentaires reliés par une liaison par BUS au compteur-décompteur 211. Les décodeurs élémentaires sont référencés 212ₗ, 212ₖ à 212ₙ.

De structure sensiblement analogue, le circuit de comptage-décomptage 21 représenté en figure 6a présente du point de vue du fonctionnement, vis-à-vis du même circuit représenté en figure 5a, les différences ci-après :
- le compteur-décompteur 211, au lieu de délivrer la valeur de comptage-décomptage finale Df, délivre en fait, dans le mode de réalisation de la figure 6a, l'ensemble des valeurs de comptage-décomptage depuis la valeur initiale jusqu'à la valeur de comptage-décomptage finale Df, l'ensemble de ces valeurs de comptage-décomptage étant désigné sur la figure 6a par la valeur de comptage-décomptage courante Dᵢ. Ces valeurs de comptage-décomptage sont bien entendu codées sur N bits. Le circuit de programmation de la valeur de décomptage finale 210 remplit une fonction identique au circuit correspondant de la figure 5a ;
- chaque décodeur élémentaire 212ₗ, 212ₖ, 212ₙ est alors programmé avec une valeur de décodage programmée qui lui est propre, ces valeurs en conséquence étant notées Xₗ, Xₖ à Xₙ. La valeur de comptage-décomptage courante Dᵢ est ainsi délivrée à tous les décodeurs élémentaires en parallèle et, sur atteinte par la valeur de comptage-décomptage courante Dᵢ de la valeur programmée de décodage Xₗ, Xₖ respectivement Xₙ, chaque décodeur élémentaire 212ₗ, 212ₖ à 212ₙ délivre successivement, sur atteinte de la valeur de comptage-décomptage Dᵢ courante de la valeur de décodage programmée correspondante Xₗ, Xₖ à Xₙ, un signal d'initialisation élémentaire correspondant, noté respectivement lRESET, kRESET et nRESET.

La forme des signaux d'initialisation élémentaires correspondants est représentée en figure 6b. Chaque signal élémentaire d'initialisation correspond à un signal à la valeur logique vraie pendant la durée de la phase d'initialisation ϕ augmentée en fonction de la valeur de décodage programmée Xₗ, Xₖ, Xₙ du produit de chaque valeur de décodage programmée et de la période T de la suite d'impulsions constitutives du premier signal de détection d'horloge contrôlé H₀, chaque signal d'initialisation élémentaire étant à la valeur complémentée de la valeur logique vraie au-delà.

En outre, le circuit de verrouillage 213 est maintenu, étant entendu toutefois que ce dernier peut consister uniquement en un circuit relayant la sortie du décodeur élémentaire 212ₙ pour lequel la valeur de décodage programmée Xₙ est la plus grande, à l'entrée de verrouillage du compteur-décompteur 211.

On a ainsi décrit un dispositif numérique d'initialisation d'un circuit intégré particulièrement performant, d'une part, en raison de la souplesse de la forme des signaux d'initialisation susceptibles d'être engendrés en raison du caractère programmable de ce dispositif, et d'autre part, en raison du fait que l'ensemble des éléments constitutifs de ce dispositif peut être réalisé sous forme de circuit intégré en technologie CMOS au moyen d'éléments essentiellement numériques avec un gain de surface de silicium consommée dans un rapport de l'ordre de 100 par rapport aux circuits de type analogique de l'art antérieur.

## Revendications

1. Dispositif numérique d'initialisation d'un circuit intégré alimenté à partir d'une tension d'alimentation (120,130), ce dispositif comportant des moyens générateurs d'un signal d'horloge) contrôlé (1) comportant une phase initiale de pré-oscillation (ϕ) suivie d'un signal périodique (T), et des moyens générateurs d'un signal d'initialisation programmable (2) recevant ledit signal d'horloge contrôlé (1), **caractérisé en ce que** lesdits moyens générateurs d'un signal d'horloge contrôlé (1) comportent un oscillateur asservi en courant comportant en cascade :
- un oscillateur à cristal (11),
- un premier étage de type amplificateur (12) commandé par l'oscillateur à cristal (11) et un deuxième étage (13) de type bistable commandé en commutation par le premier étage (12), et
- un étage de commande en courant (14) du premier et du deuxième étage, lesdits moyens générateurs (1,2) permettant d'engendrer ledit signal d'initialisation (RESET) maintenu à une valeur logique vraie pendant la durée de ladite phase initiale de pré-oscillation (ϕ) augmentée d'un nombre déterminé de périodes dudit signal périodique (T).

2. Dispositif selon la revendication 1, **caractérisé en ce que** lesdits moyens générateurs (2) d'un signal d'initialisation (RESET) comprennent :
- un module de détection (20) recevant ledit signal d'horloge contrôlé (CCLK) et délivrant, d'une part, un signal logique de détection d'horloge contrôlé (RESET2) à la valeur logique vraie pendant la durée de la phase de pré-oscillation (ϕ) et à la valeur complémentée de cette valeur vraie au delà de ladite phase de pré-oscillation (ϕ), et, d'autre part, un premier signal de détection d'horloge contrôlé (H₀);
- un module de comptage-décomptage (21), d'un nombre déterminé d'impulsions recevant, d'une part, le signal de détection d'horloge contrôlé (RESET2) délivré par le module de détection (20) et, d'autre part, ledit premier signal de détection d'horloge contrôlé (H₀) et délivrant ledit signal d'initialisation (RESET) maintenu à la valeur vraie pendant la durée de la phase initiale de préoscillation (ϕ) augmentée dudit nombre déterminé de périodes (T) de la suite d'impulsions périodiques.

3. Dispositif selon la revendication 2, **caractérisé en ce que** ledit module de détection (20) comporte :
- un premier circuit de déclenchement à seuil (201) recevant ledit signal d'horloge contrôle (H₀) et dont la valeur de seuil constituant une première valeur de seuil est supérieure à la valeur d'amplitude du signal d'horloge pendant la phase de pré-oscillation de celui-ci, ledit premier circuit de déclenchement à seuil (201) délivrant ledit premier signal de détection d'horloge contrôlé à la valeur logique vraie lorsque le signal d'horloge contrôlé est supérieur à la première valeur de seuil (S₁) et à une valeur complémentée de cette valeur vraie lorsque le signal d'horloge contrôlé est inférieur à cette première valeur de seuil (S₁);
- un deuxième circuit de déclenchement à seuil (202) recevant ledit signal d'horloge contrôlé (H₀) et dont la valeur de seuil constituant une deuxième valeur de seuil est inférieure à la valeur d'amplitude du signal d'horloge contrôlé pendant la phase de pré-oscillation de celui-ci, ledit deuxième circuit de déclenchement à seuil (202) délivrant un deuxième signal de détection d'horloge contrôlé à la valeur logique vraie lorsque le signal d'horloge contrôlé est inférieur à la deuxième valeur de seuil (S₂) et à une valeur complémentée de cette valeur vraie lorsque le signal d'horloge contrôlé est supérieur à cette deuxième valeur de seuil (S₂);
- une porte logique NON-ET (NAND, 204) et un premier circuit retardateur (203), recevant chacun le premier et le deuxième signal de détection d'horloge contrôlé respectivement, ledit premier circuit retardateur délivrant un deuxième signal de détection d'horloge contrôlé retardé (H₁), ladite porte logique NON-ET (204) recevant ledit deuxième signal de détection d'horloge contrôlé retardé (H₁) et délivrant un signal logique intermédiaire (RESET₀) à la valeur vraie lorsque l'un des premier respectivement deuxième signal de détection d'horloge contrôlé retardé (H₁) est à la valeur vraie et ce signal logique intermédiaire à la valeur complémentée de cette valeur vraie lorsque le premier signal de détection d'horloge (H₀) et le deuxième signal de détection d'horloge contrôlé retardé (H₁) ont la même valeur logique ;
- une porte logique ET (AND 206) et un deuxième circuit retardateur (205) d'un retard de valeur supérieure (τ') à celle du premier circuit retardateur (203), recevant directement ledit signal logique intermédiaire, le deuxième circuit retardateur délivrant un signal logique intermédiaire retardé (RESET1), ladite porte logique ET recevant en outre ledit signal logique intermédiaire retardé et délivrant ledit signal logique de détection d'horloge (RESET2).

4. Dispositif selon la revendication 2, **caractérisé en ce que** ledit module de comptage-décomptage (21) d'un nombre déterminé d'impulsions comporte :
- un compteur-décompteur programmable (211), la valeur de comptage-décomptage finale f(N) étant programmable, ledit compteur-décompteur recevant sur une première entrée de déclenchement de comptage ledit signal logique de détection d'horloge (H₀) et sur une deuxième entrée de comptage ledit premier signal de détection d'horloge contrôlé (RESET 2) engendré par ledit circuit de détection d'horloge, ledit compteur-décompteur (211) délivrant une valeur de comptage-décomptage finale (D_{f}), égale à la valeur programmée (X), codée sur N bits ;
- un circuit décodeur programmable (212) par une valeur de décodage programmée recevant ladite valeur de comptage-décomptage finale (D_{f}) et délivrant sur une sortie ledit signal d'initialisation (RESET) maintenu à une valeur vraie pendant la durée de ladite phase initiale (ϕ) de pré-oscillation augmentée du nombre déterminé de périodes de la suite d'impulsions périodiques ;
- un circuit de verrouillage (213) délivrant ledit signal d'initialisation audit circuit compteur-décompteur (211) pour assurer l'arrêt du comptage-décomptage de la valeur de comptage-décomptage finale (D_{f}) programmée.

5. Dispositif selon la revendication 3, **caractérisé en ce que** ledit module de comptage-décomptage (21) d'un nombre déterminé d'impulsions comporte :
- un compteur-décompteur programmable (211) par une valeur de comptage-décomptage finale (D_{f}) programmée, ledit compteur-décompteur (211) recevant sur une première entrée de déclenchement de comptage-décomptage ledit signal logique de détection d'horloge (H₀) et sur une deuxième entrée de comptage ledit premier signal de détection d'horloge engendré par ledit circuit de détection d'horloge (RESET2), ledit compteur-décompteur délivrant toutes les valeurs intermédiaires de comptage-décomptage jusqu'à la valeur finale de comptage-décomptage, égale à la valeur programmée, codées sur N bits ;
- une pluralité de circuits décodeurs programmables (212₁....212ₙ) recevant chacun l'ensemble des valeurs de comptage-décomptage, chacun des circuits décodeurs étant programmé à une valeur de décodage programmée égale à l'une des valeurs de l'ensemble des valeurs de comptage-décomptage et délivrant chacun, sur atteinte par la valeur de comptage-décomptage de la valeur de décodage programmée, un signal d'initialisation ;
- un circuit de verrouillage (213) reliant la sortie du circuit décodeur dont la valeur de décodage programmée est la plus élevée audit circuit compteur-décompteur et permettant d'assurer le verrouillage du comptage-décomptage sur atteinte par la valeur de comptage-décomptage de ladite valeur de décodage programmée la plus élevée.

## Claims

1. Digital device for initializing an integrated circuit supplied from a supply voltage (120,130), this device including means for generating a monitored clock signal (1) including an initial phase of pre-oscillation (ϕ) followed by a periodic signal (T), and means for generating a programable initialization signal (2) receiving the said monitored clock signal (1), **characterized in that** the said means for generating a monitored clock signal include a current-regulated oscillator including in cascade:
- a crystal oscillator (11),
- a first stage of amplifier type (12) controlled by the crystal oscillator (11) and a second stage (13) of bistable type controlled in switch mode by the first stage (12), and
- a stage for controlling the current (14) of the first and of the second stage, the said generating means (1,2) making it possible to generate the said initialization signal (RESET) held at a true logic value for the duration of the said initial phase of pre-oscillation (ϕ) increased by a specified number of periods of the said periodic signal (T).

2. Device according to Claim 1, **characterized in that** the said means (2) for generating an initialization signal (RESET) comprise:
- a detection module (20) receiving the said monitored clock signal (CCLK) and delivering, on the one hand, a monitored clock detection logic signal (RESET2) at the true logic value for the duration of the pre-oscillation phase (ϕ) and at the value complementary to this true value beyond the said pre-oscillation phase, and, on the other hand, a first monitored clock detection signal (H₀);
- a module for the forward/backward counting (21) of a specified number of pulses receiving, on the one hand, the monitored clock detection signal (RESET2) delivered by the detection module (20) and, on the other the hand, the said first monitored clock detection signal (H₀) and delivering the said initialization signal (RESET) held at the true value for the duration of the initial phase of pre-oscillation (ϕ) increased by the said specified number of periods (T) of the string of periodic pulses.

3. Device according to Claim 2, **characterized in that** the said detection module (20) includes:
- a first trigger circuit with threshold (201) receiving the said monitored clock signal (H₀) and whose threshold value constituting a first threshold value is greater than the amplitude value of the clock signal during the latter's pre-oscillation phase, the said first trigger circuit with threshold (201) delivering the said first monitored clock detection signal at the true logic value when the monitored clock signal is greater than the first threshold value (S₁) and at a value complementary to this true value when the monitored clock signal is less than this first threshold value (S₁);
- a second trigger circuit with threshold (202) receiving the said monitored clock signal (H₀) and whose threshold value constituting a second threshold value is less than the amplitude value of the monitored clock signal during the latter's pre-oscillation phase, the said second trigger circuit with threshold (202) delivering a second monitored clock detection signal at the true logic value when the monitored clock signal is less than the second threshold value (S₂) and at a value complementary to this true value when the monitored clock signal is greater than this second threshold value (S₂);
- a NAND logic gate (204) and a first delayer circuit (203), each receiving the first and the second monitored clock detection signal respectively, the said first delayer circuit delivering a second delayed monitored clock detection signal (H₁), the said NAND logic gate (204) receiving the said second delayed monitored clock detection signal (H₁) and delivering an intermediate logic signal (RESET₀) at the true value when one of the first respectively second (H₁) delayed monitored clock detection signals is at the true value and this intermediate logic signal at the value complementary to this true value when the first clock detection signal (H₀) and the second delayed monitored clock detection signal (H₁) have the same logic value;
- an AND logic gate (206) and a second delayer circuit (205) producing a delay of greater value (τ') than that of the first delayer circuit (203), receiving the said intermediate logic signal directly, the second delayer circuit delivering a delayed intermediate logic signal (RESET1), the said AND logic gate moreover receiving the said delayed intermediate logic signal and delivering the said clock detection logic signal (RESET2).

4. Device according to Claim 2, **characterized in that** the said module for the forward/backward counting (21) of a specified number of pulses includes:
- a programable forward/backward counter (211), the final forward/backward count value f(N) being programable, the said forward/backward counter receiving on a first counting trigger input the said clock detection logic signal (H₀) and on a second counting input the said first monitored clock detection signal (RESET2) generated by the said clock detection circuit, the said forward/backward counter (211) delivering a final forward/backward count value (Df), equal to the programed value (X), coded on N bits;
- a decoder circuit programable (212) via a programed decoding value receiving the said final forward/backward count value (Df) and delivering on an output the said initialization signal (RESET) held at a true value for the duration of the said initial phase (ϕ) of pre-oscillation increased by the specified number of periods of the string of periodic pulses;
- a latching circuit (213) delivering the said initialization signal to the said forward/backward counter circuit (211) so as to halt the forward/backward counting of the programed final forward/backward count value (Df).

5. Device according to Claim 3, **characterized in that** the said module (21) for the forward/backward counting of a specified number of pulses includes:
- a forward/backward counter programable (211) via a programed final forward/backward count value (Df), the said forward/backward counter (211) receiving on a first forward/backward counting trigger input the said clock detection logic signal and on a second counting input the said first clock detection signal generated by the said clock detection circuit (RESET2), the said forward/backward counter delivering all the intermediate forward/backward count values up to the final forward/backward count value equal to the programed value, all coded on N bits;
- a plurality of programable decoder circuits each receiving the set of forward/backward count values (212₁ ...212ₙ) , each of the decoder circuits being programed with a programed decoding value equal to one of the values of the set of forward/backward count values and each delivering, when the forward/backward count value reaches the programed decoding value, an initialization signal;
- a latching circuit (213) linking the output of the decoder circuit whose programed decoding value is highest to the said forward/backward counter circuit and permitting the latching of the forward/backward count when the forward/backward count value reaches the said highest programed decoding value.

## Patentansprüche

1. Digitale Initialisierungsvorrichtung für eine mit einer Versorgungsspannung (120, 130) versorgten integrierte Schaltung, wobei diese Vorrichtung Mittel (1) zur Erzeugung eines gesteuerten Taktsignals, das eine Anfangsphase des Vorschwingens (ϕ), gefolgt von einem periodischen Signal (T), aufweist, und Mittel (2) zur Erzeugung eines programmierbaren Initialisierungssignals aufweist, welche das gesteuerte Taktsignal (1) empfangen, **dadurch gekennzeichnet, dass** die Mittel (1) zur Erzeugung eines gesteuerten Taktsignals, einen stromgeregelten Oszillator aufweisen, welcher hintereinander aufweist:
- einen Quarzoszillator (11),
- eine erste Stufe (12) vom Typ Verstärker, die vom Quarzoszillator (11) gesteuert wird, und eine zweite Stufe (13) vom bistabilen Typ, die von der ersten Stufe (12) schaltgesteuert wird, und
- eine Stromsteuerstufe (14) für die erste und die zweite Stufe, wobei die Mittel (1, 2) es ermöglichen, das Initialisierungssignal (RESET) zu erzeugen, das während der Dauer der Anfangsphase des Vorschwingens (ϕ) und dann während einer bestimmten Anzahl von Perioden des periodischen Signals (T) auf einem logischen Wert "wahr" gehalten wird.

2. Vorrichtung nach Anspruch 1, **dadurch gekennzeichnet, dass** die Mittel (2) zur Erzeugung eines Initialisierungssignals (RESET) aufweisen:
- einen Erfassungsmodul (20), der das gesteuerte Taktsignal (CCLK) empfängt und einerseits ein logisches Signal (RESET₂) der Erfassung des gesteuerten Taktsignals während der Dauer der Phase des Vorschwingens (ϕ) auf dem logischen Wert "wahr", und nach der Phase des Vorschwingens (ϕ) auf dem komplementären Wert dieses Werts "wahr", und andererseits ein erstes Signal (H₀) der Erfassung des gesteuerten Taktsignals liefert;
- einen Vorwärts-/Rückwärtszähl-Modul (21) für eine bestimmte Anzahl von Impulsen, der einerseits das Signal (RESET₂) der Erfassung des gesteuerten Taktsignals, das vom Erfassungsmodul (20) geliefert wird, und andererseits das erste Signal (H₀) der Erfassung des gesteuerten Taktsignals empfängt und das Initialisierungssignal (RESET) liefert, das während der Anfangsphase des Vorschwingens (ϕ) und danach während der bestimmten Anzahl von Perioden (T) der Folge von periodischen Impulsen auf dem Wert "wahr" gehalten wird.

3. Vorrichtung nach Anspruch 2, **dadurch gekennzeichnet, dass** der Erfassungsmodul (20) aufweist:
- eine erste Auslöse-Schwellenschaltung (201), die das gesteuerte Taktsignal (H₀) empfängt und deren einen ersten Schwellwert bildender Schwellwert größer ist als der Amplitudenwert des Taktsignals während dessen Phase des Vorschwingens, wobei die erste Auslöse-Schwellenschaltung (201) das erste Signal der Erfassung des gesteuerten Taktsignals auf dem logischen Wert "wahr" liefert, wenn das gesteuerte Taktsignal größer ist als der erste Schwellwert (S1), und auf einem komplementären Wert zu diesem Wert "wahr" liefert, wenn das gesteuerte Taktsignal unter diesem ersten Schwellwert (S1) liegt;
- eine zweite Auslöse-Schwellenschaltung (202), die das gesteuerte Taktsignal (H₀) empfängt und deren einen zweiten Schwellwert bildender Schwellwert geringer als der Amplitudenwert des gesteuerten Taktsignals während dessen Phase des Vorschwingens ist, wobei die zweite Auslöse-Schwellenschaltung (202) ein zweites Signal der Erfassung des gesteuerten Taktsignals auf dem logischen Wert "wahr" liefert, wenn das gesteuerte Taktsignal unter dem zweiten Schwellwert (S2) liegt, und auf einem komplementären Wert zu diesem Wert "wahr" liefert, wenn das gesteuerte Taktsignal größer als dieser zweite Schwellwert (S2) ist;
- ein logisches NICHT-UND-Gatter (NAND, 204) und eine erste Verzögerungsschaltung (203), die das erste bzw. das zweite Signal der Erfassung des gesteuerten Taktsignals empfangen, wobei die erste Verzögerungsschaltung ein zweites, verzögertes Signal (H₁) der Erfassung des gesteuerten Taktsignals liefert, während das logische NICHT-UND-Gatter (204) das zweite, verzögerte Signal (H₁) der Erfassung des gesteuerten Taktsignals empfängt und ein logisches Zwischensignal (RESET₀) auf dem Wert "wahr" liefert, wenn das erste oder das zweite verzögerte Signal (H₁) der Erfassung des gesteuerten Taktsignals auf dem Wert "wahr" und dieses logische Zwischensignal auf dem komplementären Wert zu diesem Wert "wahr" ist, wenn das erste Signal (H₀) der Erfassung des Taktsignals, und das zweite, verzögerte Signal (H₁) der Erfassung des Taktsignals den gleichen logischen Wert haben;
- ein logisches UND-Gatter (AND, 206) und eine zweite Verzögerungsschaltung (205) mit einer Verzögerung (τ'), die größer ist als die der ersten Verzögerungsschaltung (203), die direkt das logische Zwischensignal empfangen, wobei die zweite Verzögerungsschaltung ein verzögertes logisches Zwischensignal (RESET₁) liefert, wobei das logische UND-Gatter außerdem das verzögerte logische Zwischensignal empfängt und das logische Signal (RESET₂) der Erfassung des Taktsignals liefert.

4. Vorrichtung nach Anspruch 2, **dadurch gekennzeichnet, dass** der Vorwärts-/Rückwärtszählmodul (21) für eine bestimmte Anzahl von Impulsen aufweist:
- einen programmierbaren Vorwärts-Rückwärtszähler (211), wobei der Endwert f(N) der Vorwärts-Rückwärtszählung programmierbar ist, wobei der Vorwärts-Rückwärtszähler an einem ersten Starteingang des Zählvorgangs das logische Signal (H₀) der Erfassung des Taktsignals und an einem zweiten Zähleingang, das erste, von der Taktsignal-Erfassungsschaltung erzeugte Signal (RESET₂) der Erfassung des gesteuerten Taktsignals empfängt, wobei der Vorwärts-Rückwärtszähler (211) einen Endwert (D_{f}) des Vorwärts-Rückwärtszählens gleich dem programmierten Wert (X) liefert, der mittels N Bits kodiert ist;
- eine durch einen programmierten Dekodierwert programmierbare Dekodierschaltung (212), die den Endwert (D_{f}) des Vorwärts-Rückwärtszählens empfängt und ausgangsseitig das Initialisierungssignal (RESET) liefert, das während der Dauer der Anfangsphase (ϕ) des Vorschwingens und dann während der bestimmten Anzahl von Perioden der Folge von periodischen Impulsen auf einem Wert "wahr" gehalten wird;
- eine Verriegelungsschaltung (213), die das Initialisierungssignal an die Vorwärts-Rückwärtszählschaltung (211) liefert, um das Anhalten des Vorwärts-Rückwärtszählens des programmierten Endwerts (D_{f}) des Vorwärts-Rückwärtszählens zu gewährleisten.

5. Vorrichtung nach Anspruch 3, **dadurch gekennzeichnet, dass** der Vorwärts-Rückwärtszählmodul (21) für eine bestimmte Anzahl von Impulsen aufweist:
- einen Vorwärts-Rückwärtszähler (211), der durch einen programmierten Endwert (D_{f}) des Vorwärts-Rückwärtszählens programmierbar ist, wobei der Vorwärts-Rückwärtszähler (211) an einem ersten Starteingang des Vorwärts-Rückwärtszählens, das logische Signal (H₀) der Erfassung eines Taktsignals, und an einem zweiten Zähleingang das erste, von der Taktsignal-Erfassungsschaltung erzeugte Signal (RESET₂) der Erfassung eines Taktsignals empfängt, wobei der Vorwärts-Rückwärtszähler alle, mittels N Bits Kodierte Zwischenwerte des Vorwärts-Rückwärtszählens bis zum Endwert des Vorwärts-Rückwärtszählens liefert, der gleich dem programmierten Wert ist;
- eine Vielzahl programmierbarer Dekodierschaltungen (212₁,...212ₙ), die je die Gesamtheit der Werte des Vorwärts-Rückwärtszählens empfangen, wobei jede Dekodierschaltung auf einen programmierten Dekodierwert programmiert ist, der gleich einem der Werte der Gesamtheit der Vorwärts-Rückwärtszählwerte ist, und nach Erreichen des programmierten Dekodierwerts durch den Vorwärts-Rückwärtszählwert ein Initialisierungssignal liefert;
- eine Verriegelungsschaltung (213), die den Ausgang der Dekodierschaltung, deren programmierter Dekodierwert der höchste ist, mit der Vorwärts-Rückwärtszählschaltung verbindet und die Verriegelung des Vorwärts-Rückwärtszählens nach Erreichen des höchsten programmierten Dekodierwerts durch den Vorwärts-Rückwärtszählwert gewährleistet.
